Europäisches Patentamt

European Patent Office

Office européen des brevets

(11) Veröffentlichungsnummer: **0 477 419 A1**

## EUROPÄISCHE PATENTANMELDUNG

(21) Anmeldenummer: **90118713.8**

(22) Anmeldetag: **28.09.90**

(51) Int. Cl.5: **G01F 1/66**

(43) Veröffentlichungstag der Anmeldung:
**01.04.92 Patentblatt 92/14**

(84) Benannte Vertragsstaaten:
**AT BE CH DE DK ES FR GB GR IT LI LU NL SE**

(71) Anmelder: **SIEMENS AKTIENGESELLSCHAFT**
**Wittelsbacherplatz 2**
**W-8000 München 2(DE)**

(72) Erfinder: **Magori, Valentin**
**Limburgstr. 17**
**W - 8000 München 90(DE)**

(54) **Ultraschall (US)-Durchflussmesser-Einbaueinheit zum Einbauen in ein Messrohr.**

(57) Eine Ultraschall (US)-Durchflußmesser-Einbaueinheit (E) zum Einbauen in ein Meßrohr (M), insbesondere zur Luftmassenmessung in einem Kraftfahrzeugmotor, mit zwei US-Wandlern (2, 3), die abwechselnd als Sendewandler oder Empfangswandler arbeiten, wobei die beiden US-Wandler (2, 3) zur Bildung eines das Meßrohr (M) durchlaufenden, gegen die Strömungsrichtung geneigten Schallweges für US-Wellen zwischen dem jeweiligen US-Sendewandler und dem jeweiligen US-Empfangswandler in Strahlrichtung sich gegenüberstehend angeordnet sind. Es ist eine Träger- und Montageplatte (1) zum Tragen des einen der US-Wandler (2) sowie zum abdichtenden Montieren der Einbaueinheit (E) über einer Aufnahmeöffnung (5) für die Einbaueinheit (E) in dem Meßrohr (M) vorgesehen. Der eine US-Wandler (2) und der andere US-Wandler (3) sind mittels einer biegefesten, strömungsdurchlässigen Haltekonstruktion (4) unter einem vorbestimmten Winkel gegen die Strömungsrichtung geneigt und axial aufeinander ausgerichtet derart angeordnet, daß ein zwischen den beiden US-Wandlern (2, 3) zur Durchflußmessung erforderlicher Schallweg innerhalb des Meßrohrs (M) gebildet wird. Die Träger- und Montageplatte (1) trägt auf ihrer dem Meßrohr (M) abgewandten Seite eine Betriebs- und Meßelektronikeinheit (6) auf sich. In die Haltekonstruktion (4) sind die erforderlichen elektrischen Leitungen für den aufnahmeöffnungsfernen US-Wandler (3) integriert.

Die vorliegende Erfindung betrifft eine Ultraschall (US)-Durchflußmesser-Einbaueinheit zum Einbauen in ein Meßrohr, insbesondere zur Luftmassenmessung in einem Kraftfahrzeugmotor, mit zwei US-Wandlern, die abwechselnd als Sendewandler oder Empfangswandler arbeiten, wobei die beiden US-Wandler zur Bildung eines das Meßrohr durchlaufenden, gegen die Strömungsrichtung geneigten Schallweges für US-Wellen zwischen dem jeweiligen US-Sendewandler und dem jeweiligen US-Empfanswandler in Strahlrichtung sich gegenüberstehend angeordnet sind.

In verschiedenen Anwendungsbereichen, z. B. in der Kraftfahrzeugtechnik, besteht ein Bedarf nach einem kompakten Durchflußmesser, der ohne besondere Schwierigkeiten in ein Meßrohr, das entweder bereits mit einer entsprechenden Aufnahmeöffnung versehen ist oder bei dem die erforderliche Aufnahmeöffnung nachträglich gebildet werden muß, einbaubar ist.

Der vorliegenden Erfindung liegt die Aufgabe zugrunde, eine Einbaueinheit der genannten Art zu schaffen, die einen einfachen, robusten Aufbau hat, problemlos auch nachträglich in ein betreffendes Meßrohr einbaubar ist und eine leicht zugängliche Betriebs- und Meßelektronik enthält.

Die Aufgabe wird durch eine Ultraschall-Durchflußmesser-Einbaueinheit der eingangs genannten Art und entsprechend dem Oberbegriff des Patentanspruchs 1 gelöst, die erfindungsgemäß dadurch gekennzeichnet ist, daß eine Träger- und Montageplatte zum Tragen des einen der US-Wandler sowie zum abdichtenden Montieren der Einbaueinheit über einer Aufnahmeöffnung für die Einbaueinheit in dem Meßrohr vorgesehen ist, daß der eine US-Wandler und der andere US-Wandler mittels einer biegefesten, strömungsdurchlässigen Haltekonstruktion unter einem vorbestimmten Winkel gegen die Strömungsrichtun geneigt und axial aufeinander ausgerichtet derart angeordnet sind, daß ein zwischen den beiden US-Wandlern zur Durchflußmessung erforderlicher Schallweg innerhalb des Meßrohrs gebildet wird, daß die Träger- und Montageplatte auf ihrer dem Meßrohr abgewandten Seite eine Betriebs- und Meßelektronikeinheit auf sich trägt und daß in die Haltekonstruktion die erforderlichen elektrischen Leitungen für den aufnahmeöffnungsfernen US-Wandler integriert sind.

Eine zweite Ausführungsform der Erfindung sieht zur Lösung der genannten Aufgabe vor, daß ein Träger- und Montagegewindekopf zum Tragen des einen der US-Wandler sowie zum abdichtenden Einschrauben der Einbaueinheit in eine mit einem Gegengewinde versehene Aufnahmeöffnung in dem Meßrohr vorgesehen ist, daß der eine US-Wandler und der andere US-Wandler mittels einer biegefesten, strömungsdurchlässigen Haltekonstruktion unter einem vorbestimmten Winkel gegen die Strömungsrichtung geneigt und axial aufeinander ausgerichtet derart angeordnet sind, daß ein zwischen den beiden US-Wandlern zur Durchflußmessung erforderlicher Schallweg innerhalb des Meßrohrs gebildet wird, daß der Träger- und Montagegewindekopf auf seiner dem Meßrohr abgewandten Seite eine Betriebs- und Meßelektronikeinheit auf sich trägt und daß in die Haltekonstruktion die erforderlichen elektrischen Leitungen für den aufnahmeöffnungsfernen anderen US-Wandler integriert sind.

Vorteilhafte Weiterbildungen der Erfindung sind durch die in den Unteransprüchen angegebenen Merkmale gekennzeichnet.

Im folgenden wird die Erfindung anhand mehrerer Figuren, die bevorzugte Ausführungsbeipiele der Erfindung betreffen, im einzelnen beschrieben.

Fig. 1      zeigt eine schematische Schnittansicht eines ersten Ausführungsbeipiels der erfindungsgemäßen Einbaueinheit und eines betreffenden Meßrohrs, in das die Einbaueinheit einzubauen ist.

Fig. 2      zeigt eine schematische Schnittansicht eines zweiten Ausführungsbeispiels der erfindungsgemäßen Einbaueinheit und eines betreffenden Meßrohrs, in das die Einbaueinheit einzubauen ist.

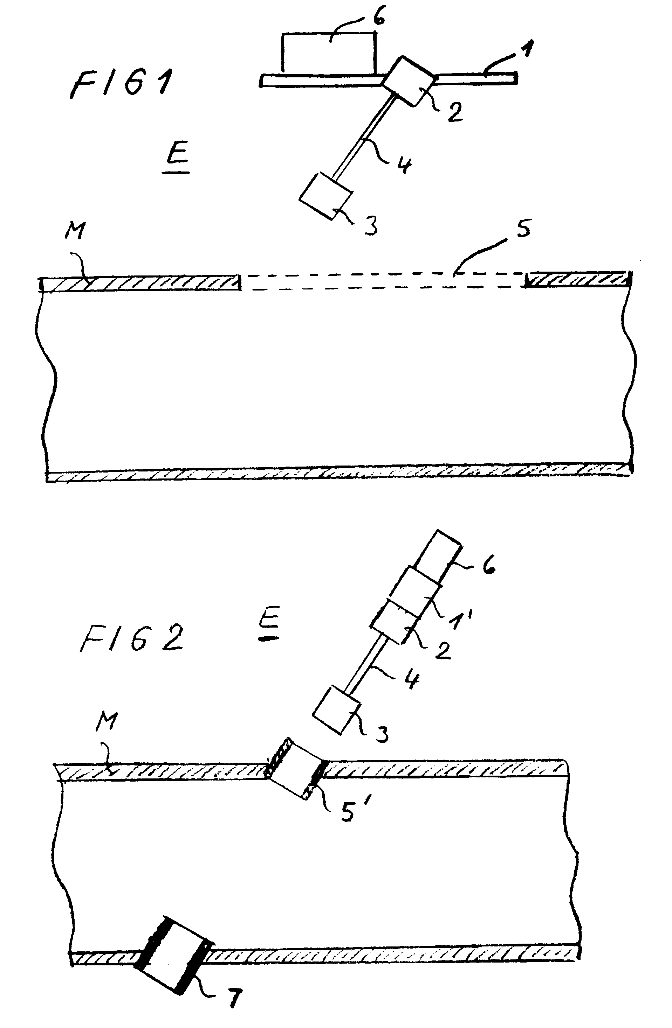

Wie Fig. 1 zeigt, ist für die Einbaueinheit E eine Träger- und Montageplatte 1 zum Tragen des einen der US-Wandler 2 sowie zum abdichtenden Montieren der Einbaueinheit E über einer Aufnahmeöffnung 5 für die Einbaueinheit E in dem Meßrohr M vorgesehen. Der eine US-Wandler 2 und der andere US-Wandler 3 sind mittels einer biegefesten, strömungsdurchlässigen Haltekonstruktion 4 unter einem vorbestimmten Winkel gegen die Strömungsrichtung geneigt und axial aufeinander ausgerichtet derart angeordnet, daß ein zwischen den beiden US-Wandlern 2, 3 zur Durchflußmessung erforderlicher Schallweg innerhalb des Meßrohrs M gebildet wird. Die Träger- und Montageplatte 1 trägt ihrer dem Meßrohr M abgewandten Seite eines Betriebs- und Meßelektronikeinheit 6 auf sich. In die Haltekonstruktion 4 sind die erforderlichen elektrischen Leitungen für den aufnahmeöffnungsfernen US-Wandler 3 integriert.

Die Haltekonstruktion 4 ist im wesentlichen stabförmig und weist eine axiale Abmessung auf, die es gestattet, den aufnahmeöffnungsfernen US-Wandler 3 bei dem Einbauen der Einbaueinheit E in das Meßrohr M abdichtend in eine Fixierungsöffnung 7 in dem der Aufnahmeöffnung 5 gegenüberliegenden Teil der Wandung des Meßrohrs M einzusetzen. Dabei kann die Haltekonstruktion aus einem starren Gestänge bestehen.

Gemäß einer vorteilhaften Weiterbildung der Erfindung kann vorgesehen sein, daß die Haltekonstruktion 4 im wesentlichen stabförmig ist und eine in axialer Richtung veränderbare Abmessung aufweist, die es gestattet, den aufnahmeöffnungsfernen US-Wandler 3 bei dem Einbauen der Einbaueinheit E in das Meßrohr M abdichtend in eine Fixierungsöffnung 7 in der der Aufnahmeöffnung 5 gegenüberliegenden Wandung des Meßrohrs M einzusetzen. Dabei besteht die Haltekonstruktion 4 vorteilhafterweise aus einem Gestänge mit teleskopartigen Stäben, die eine Längenänderung der Haltekonstruktion gestatten. Die teleskopartigen Stäbe sind vorzugsweise durch eine jeweils in sie integrierte Federanordnung, vorzugsweise Druckfederanordnung, axial in Richtung ihrer größten Längenausdehnung vorgespannt, so daß ein einwandfreier Sitz in der Fixierungsöffnung 7 auch bei Meßrohren M unterschiedlicher Durchmesser gewährleistet ist.

Die Haltekonstruktion 4 kann jedoch auch aus einer in Strömungsrichtung offenen Blechkonstruktion bestehen. Dabei kann vorteilhafterweise vorgesehen sein, daß die Blechkonstruktion mit zumindest einem Leitblech zur Strömungsharmonisierung und/oder zur Bildung eines relevanten Teilstroms versehen ist.

Bei dem in Fig. 2 gezeigten Ausführungsbeispiel ist errfindungsgemäß ein Träger- und Montagegewindekopf 1 zum Tragen des einen der US-Wandler 2 sowie zum abdichtenden Einschrauben der Einbaueinheit E in eine mit einem Gegengewinde versehene Aufnahmeöffnung 5 in dem Meßrohr M vorgesehen. Der eine US-Wandler 2 und der andere US-Wandler 3 sind mittels einer biegefesten, strömungsdurchlässigen Haltekonstruktion 4 unter einem vorbestimmten Winkel gegen die Strömungsrichtung geneigt und axial aufeinander ausgerichtet derart angeordnet , daß ein zwischen den beiden US-Wandlern 2, 3 zur Durchflußmessung erforderlicher Schallweg innerhalb des Meßrohrs M gebildet wird. Der Träger- und Montagegewindekopf 1 trägt auf seiner dem Meßrohr M abgewandten Seite eine Betriebs- und Meßelektronikeinheit 6 auf sich. In die Haltekonstruktion 4 sind die erforderlichen elektrischen Leitungen für den aufnahmeöffnungsfernen anderen US-Wandler 3 integriert.

In dieser Ausführungsform kann vorgesehen sein, daß die Haltekonstruktion 4 im wesentlichen stabförmig ist und eine axiale Abmessung aufweist, die es gestattet, den aufnahmeöffnungsfernen US-Wandler 3 bei dem Einbauen der Einbaueinheit E in das Meßrohr M abdichtend in eine Fixierungsöffnung 7 in der der Aufnahmeöffnung 5 gegenüberliegenden Wandung des Meßrohrs M einzusetzen. Dabei kann die Haltekonstruktion aus einem starren Gestänge bestehen.

Es kann jedoch auch vorgesehen sein, daß die Haltekonstruktion 4 im wesentlichen stabförmig ist und eine in axialer Richtung veränderbare Abmessung aufweist, die es gestattet, den aufnahmeöffnungsfernen US-Wandler 3 bei dem Einbauen der Einbaueinheit E in das Meßrohr M abdichtend in eine Fixierungsöffnung 7 in der der Aufnahmeöffnung 5 gegenüberliegenden Wandung des Meßrohrs M einzusetzen. Dabei aknn die Haltekonstruktion 4 aus einem Gestänge mit teleskopartigen Stäben bestehen, die eine Längenänderung der Haltekonstruktion 4 gestatten. Die teleskopartigen Stäbe sind vorzugsweise durch eine jeweils in sie integrierte Federanordnung, vorzugsweise Druckfederanordnung, axial in Richtung ihrer größten Längenausdehnung vorgespannt, so daß ein einwandfreier Sitz in der Fixierungsöffnung 7 auch bei Meßrohren M unterschiedlicher Durchmesser gewährleistet ist.

Andererseits kann die Haltekonstruktion 4 aus einer in Strömungsrichtung offenen Blechkonstruktion bestehen. Diese Blechkonstruktion kann vorteilhafterweise mit zumindest einem Leitblech zur Strömungsharmonisierung und/oder zur Bildung eines relevanten Teilstroms versehen sein.

## Patentansprüche

1.   Ultraschall (US)-Durchflußmesser-Einbaueinheit zum Einbauen in ein Meßrohr, insbesondere zur Luftmassenmessung in einem Kraftfahrzeugmotor, mit zwei US-Wandlern, die abwechselnd als Sendewandler oder Empfangswandler arbeiten, wobei die beiden US-Wandler zur Bildung eines das Meßrohr durchlaufenden, gegen die Strömungsrichtung geneigten Schallweges für US-Wellen zwischen dem jeweiligen US-Sendewandler und dem jeweiligen US-Empfangswandler in Strahlrichtung sich gegenüberstehend angeordnet sind, **dadurch gekennzeichnet**, daß eine Träger- und Montageplatte (1) zum Tragen des einen der US-Wandler (2) sowie zum abdichtenden Montieren der Einbaueinheit (E) über einer Aufnahmeöffnung (5) für die Einbaueinheit (E) in dem Meßrohr (M) vorgesehen ist, daß der eine US-Wandler (2) und der andere US-Wandler (3) mittels einer biegefesten, strömungsdurchlässigen Haltekonstruktion (4) unter einem vorbestimmten Winkel gegen die Strömungsrichtung geneigt und axial aufeinander ausgerichtet derart angeordnet sind, daß ein zwischen den beiden US-Wandlern (2, 3) zur Durchflußmessung erforderlicher Schallweg innerhalb des Meßrohrs (M) gebildet wird, daß die Träger- und Montageplatte (1) auf ihrer dem Meßrohr (M) abgewandten Seite eine Betriebs- und Meßelektronikeinheit (6) auf sich trägt und daß in die Haltekonstruktion (4) die erforderlichen elektrischen Leitungen für den aufnahmeöffnungsfernen US-Wandler (3) integriert sind.

2. Ultraschall-Durchflußmesser-Einbaueinheit nach Anspruch 1, **dadurch gekennzeichnet,** daß die Haltekonstruktion (4) im wesentlichen stabförmig ist und eine axiale Abmessung aufweist, die es gestattet, den aufnahmeöffnungsfernen US-Wandler (3) bei dem Einbauen der Einbaueinheit (E) in das Meßrohr (M) abdichtend in eine Fixierungsöffnung (7) in dem der Aufnahmeöffnung (5) gegenüberliegenden Teil der Wandung des Meßrohrs (M) einzusetzen.

3. Ultraschall-Durchflußmesser-Einbaueinheit nach Anspruch 1, **dadurch gekennzeichnet,** daß die Haltekonstruktion (4) im wesentlichen stabförmig ist und eine in axialer Richtung veränderbare Abmessung aufweist, die es gestattet, den aufnahmeöffnungsfernen US-Wandler (3) bei dem Einbauen der Einbaueinheit (E) in das Meßrohr (M) abdichtend in eine Fixierungsöffnung (7) in der der Aufnahmeöffnung (5) gegenüberliegenden Wandung des Meßrohrs (M) einzusetzen.

4. Ultraschall-Durchflußmesser-Einbaueinheit nach Anspruch 2, **dadurch gekennzeichnet,** daß die Haltekonstruktion aus einem starren Gestänge besteht.

5. Ultraschall-Durchflußmesser-Einbaueinheit nach Anspruch 3, **dadurch gekennzeichnet,** daß die Haltekonstruktion (4) aus einem Gestänge mit teleskopartigen Stäben besteht, die eine Längenänderung der Haltekonstruktion gestatten.

6. Ultraschall-Durchflußmesser-Einbaueinheit nach Anspruch 5, **dadurch gekennzeichnet,** daß die teleskopartigen Stäbe vorzugsweise durch eine jeweils in sie integrierte Federanordnung, vorzugsweise Druckfederanordnung, axial in Richtung ihrer größten Längenausdehnung vorgespannt sind, so daß ein einwandfreier Sitz in der Fixierungsöffnung (7) auch bei Meßrohren (M) unterschiedlicher Durchmesser gewährleistet ist.

7. Ultraschall-Durchflußmesser-Einbaueinheit nach Anspruch 1, **dadurch gekennzeichnet,** daß die Haltekonstruktion (4) aus einer in Strömungsrichtung offenen Blechkonstruktion besteht.

8. Ultraschall-Durchflußmesser-Einbaueinheit nach Anspruch 7, **dadurch gekennzeichnet,** daß die Blechkonstruktion mit zumindest einem Leitblech zur Strömungsharmonisierung und/oder zur Bildung eines relevanten Teilstroms versehen ist.

9. Ultraschall (US)-Durchflußmesser-Einbaueinheit zum Einbauen in ein Meßrohr, insbesondere zur Luftmassenmessung in einem Kraftfahrzeugmotor, mit zwei US-Wandlern, die abwechselnd als Sendewandler oder als Empfangswandler arbeiten, wobei die beiden US-Wandler zur Bildung eines das Meßrohr durchlaufenden, gegen die Strömungsrichtung geneigten Schallweges für US-Wellen zwischen dem jeweiligen US-Sendewandler und dem jeweiligen US-Empfangswandler in Strahlrichtung sich gegenüberstehend angeordnet sind, **dadurch gekennzeichnet,** daß ein Träger- und Montagegewindekopf (1) zum Tragen des einen der US-Wandler (2) sowie zum abdichtenden Einschrauben der Einbaueinheit (E) in eine mit einem Gegengewinde versehene Aufnahmeöffnung (5) in dem Meßrohr (M) vorgesehen ist, daß der eine US-Wandler (2) und der andere US-Wandler (3) mittels einer biegefesten, strömungsdurchlässigen Haltekonstruktion (4) unter einem vorbestimmten Winkel gegen die Strömungsrichtung geneigt und axial aufeinander ausgerichtet derart angeordnet sind, daß ein zwischen den beiden US-Wandlern (2, 3) zur Durchflußmessung erforderlicher Schallweg innerhalb des Meßrohrs (M) gebildet wird, daß der Träger- und Montagegewindekopf (1) auf seiner dem Meßrohr (M) abgewandten Seite eine Betriebs- und Meßelektronikeinheit (6) auf sich trägt und daß in die Haltekonstruktion (4) die erforderlichen elektrischen Leitungen für den aufnahmeöffnungsfernen anderen US-Wandler (3) integriert sind.

10. Ultraschall-Durchflußmesser-Einbaueinheit nach Anspruch 9, **dadurch gekennzeichnet,** daß die Haltekonstruktion (4) im wesentlichen stabförmig ist und eine axiale Abmessung aufweist, die es gestattet, den aufnahmeöffnungsfernen US-Wandler (3) bei dem Einbauen der Einbaueinheit (E) in das Meßrohr (M) abdichtend in eine Fixierungsöffnung (7) in der der Aufnahmeöffnung (5) gegenüberliegenden Wandung des Meßrohrs (M) einzusetzen.

11. Ultraschall-Durchflußmesser-Einbaueinheit nach Anspruch 9, **dadurch gekennzeichnet,** daß die Haltekonstruktion (4) im wesentlichen stabförmig ist und eine in axialer Richtung veränderbare Abmessung aufweist, die es gestattet, den aufnahmeöffnungsfernen US-Wandler (3) bei dem Einbauen der Einbaueinheit (E) in das Meßrohr (M) abdichtend in eine Fixierungsöffnung (7) in der der Aufnahmeöffnung (5) gegenüberliegenden Wandung des Meßrohrs (M) einzusetzen.

12. Ultraschall-Durchflußmesser-Einbaueinheit nach Anspruch 10, **dadurch gekennzeichnet,** daß die Haltekonstruktion (4) aus einem starren Gestänge besteht.

13. Ultraschall-Durchflußmesser-Einbaueinheit nach Anspruch 11, **dadurch gekennzeichnet,** daß die Haltekonstruktion (4) aus einem Gestänge mit teleskopartigen Stäben besteht, die eine Längenänderung der Haltekonstruktion (4) gestatten.

14. Ultraschall-Durchflußmesser-Einbaueinheit nach Anspruch 13, **dadurch gekennzeichnet,** daß die teleskopartige Stäbe vorzugsweise durch eine jeweils in sie integrierte Federanordnung, vorzugsweise Druckfederanordnung, axial in Richtung ihrer größten Längenausdehnung vorgespannt sind, so daß ein einwandfreier Sitz in der Fixierungsöffnung (7) auch bei Meßrohren (M) unterschiedlicher Durchmesser gewährleistet ist.

15. Ultraschall-Durchflußmesser-Einbaueinheit nach Anspruch 9, **dadurch gekennzeichnet,** daß die Haltekonstruktion (4) aus einer in Strömungsrichtung offenen Blechkonstruktion besteht.

16. Ultraschall-Durchflußmesser-Einbaueinheit nach Anspruch 15, **dadurch gekennzeichnet,** daß die Blechkonstruktion mit zumindest einem Leitblech zur Strömungsharmonisierung und/oder zur Bildung eines relevanten Teilstroms versehen ist.

FIG1

FIG2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | IEEE TRANSACTIONS ON BIO-MEDICAL ENGINEERING vol. BME11, no. 4, Oktober 1964, Seiten 154 - 155; K.G. PLASS: "A NEW ULTRASONIC FLOWMETER FOR INTRAVASCULAR APPLICATION" * Seite 155, linke Spalte, Absatz 1; Figur 3 * — — — | 1,9 | G 01 F 1/66 |
| A | GB-A-2 146 122 (PANAMETRICS INC) * Seite 9, Zeilen 40 - 51; Figur 10 * — — — | 1,9 | |
| A | US-A-4 905 203 (JACKIE C. SIMS) * Spalte 3, Zeilen 6 - 27; Figur 1 * — — — | 1,9 | |
| A | PATENT ABSTRACTS OF JAPAN vol. 7, no. 42 (P-177)(1187) 19 Februar 1983, & JP-A-57 194313 (OVAL KIKI KOGYO K.K.) 29 November 1982, * das ganze Dokument * — — — — — | 1,9 | |

**RECHERCHIERTE SACHGEBIETE (Int. Cl.5)**

G 01 F

Der vorliegende Recherchenbericht wurde für alle Patentansprüche erstellt

| Recherchenort | Abschlußdatum der Recherche | Prüfer |
|---|---|---|
| Den Haag | 06 Mai 91 | HEINSIUS R. |